# EUROPEAN PATENT APPLICATION

(11) **EP 4 443 924 A1**
(43) Date of publication of application: **09.10.2024**
(21) Application number: 23740096.5
(22) Date of filing: 13.01.2023
(51) Int. Cl.: H04W 8/24

(54) **COMMUNICATION METHOD AND DEVICE**

(30) Priority: 14.01.2022 CN 202210044467
(71) Applicant: Honor Device Co., Ltd., Shenzhen, Guangdong 518040 (CN)
(72) Inventor: SHEN, Li, Shenzhen, Guangdong 518040 (CN); HE, Yanzhao, Shenzhen, Guangdong 518040 (CN)
(74) Representative: Gill Jennings & Every LLP
(86) International application number: PCT/CN2023/072177
(87) International publication number: WO 2023/134755

(57) **Abstract**

Embodiments of this application provide a communication method and an apparatus, applied to a communication system including a base station and a terminal. The base station sends a system message. The system message includes at least configuration information of a cell used for access. An available frequency band of the base station include a first frequency band and an extended frequency band. The extended frequency band is a frequency band not included in the first frequency band. The terminal determines that the cell used for access is a first type cell that has an assigned frequency band which is within a range of the first frequency band. The terminal performs access on the cell used for access. Because the terminal determines, before performing access, that the frequency band assigned to the cell that is used for access and that is designated by the base station is within a range of the first frequency band available to the terminal, a cased that a frequency band assigned to the terminal by the base station exceeds a frequency band supported by the terminal can be avoided, thereby reducing a possibility that the terminal cannot communicate normally or even is damaged.

## Description

This application claims priority to Chinese Patent Application No. 202210044467. 0, filed with the China National Intellectual Property Administration on January 14, 2022 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

With the development of mobile communications, an increase of radio resource bandwidths available for a terminal becomes a trend.

However, an adapted bandwidth of the terminal is fixed after delivery. In this case, if an operator deploys band resources with a larger bandwidth, the terminal cannot communicate normally or may even be damaged.

### SUMMARY

This application provides a communication method and an apparatus, to resolve a problem that a terminal cannot communicate normally or even is damaged because a bandwidth of the terminal is not adapted to a bandwidth of a network.

To achieve the foregoing objective, this application provides the following technical solutions.

A first aspect of this application provides a communication method, applied to a communication system including a base station and a terminal. The base station sends a system message. The system message includes at least configuration information of a cell used for access. An available frequency band of the base station include a first frequency band and an extended frequency band. The extended frequency band is a frequency band not included in the first frequency band. The terminal determines that the cell used for access is a first type cell that has an assigned frequency band which is within a range of the first frequency band. The terminal performs access on the cell used for access. Because the terminal determines, before performing access, that the frequency band assigned to the cell that is used for access and that is designated by the base station is within a range of the first frequency band, and an available frequency band of the terminal is the first frequency band, a cased that a frequency band assigned to the terminal by the base station exceeds a frequency band supported by the terminal can be avoided, thereby reducing a possibility that the terminal cannot communicate normally or even is damaged.

A second aspect of this application provides a communication method, applied to a terminal having a first frequency band as an available frequency band. The method includes: receiving a system message sent by a base station, where the system message includes at least configuration information of a cell used for access, and an available frequency band of the base station include a first frequency band and an extended frequency band not included in the first frequency band; determining that the cell used for access is a first type cell that has an assigned frequency band which is within a range of the first frequency band; and performing access on the cell used for access. It can be learned that access is performed after determining that the frequency band of the cell used for access is within a range of the available frequency band of the terminal. This can reduce a possibility that the terminal cannot communicate normally or even is damaged because the terminal does not support the frequency band of the cell.

In some implementations of the first aspect or the second aspect of this application, after the terminal performs access on the cell used for access, the method further includes: The terminal sends a capability message to the base station.

In some implementations of the first aspect or the second aspect of this application, the capability message includes information about the available frequency band of the terminal and a starting frequency of the available frequency band of the terminal, to inform the base station of a frequency band supported by the terminal. This can avoid a case that a frequency band assigned to the terminal by the base station exceeds the frequency band supported by the terminal, thereby reducing a possibility that the terminal cannot communicate normally or even is damaged.

In some implementations of the first aspect or the second aspect of this application, the capability message further includes information about a bandwidth capability of the terminal, to provide the base station with more information about the terminal, and increase a possibility that the base station configures the available frequency band of the terminal for the terminal.

In some implementations of the first aspect or the second aspect of this application, the capability message further includes carrier aggregation capability information. The carrier aggregation capability information indicates that the terminal supports carrier aggregation in the available frequency band of the base station, to lay a foundation for improving uplink and downlink rates of the terminal.

In some implementations of the first aspect or the second aspect of this application, the method further includes: The terminal determines that at least part of a frequency band assigned to a cell configured by the base station for cell handover and cell measurement is within a range of the extended frequency band, and reports a measurement result of the first type cell, to protect the terminal from performing measurement and handover in an unsupported frequency band, and further reduce a possibility that the terminal cannot communicate normally or even is damaged because the terminal does not support the frequency band assigned by the base station.

A third aspect of this application provides a communication method, applied to a base station. An available frequency band of the base station includes a first frequency band and an extended frequency band. The extended frequency band is a frequency band not included in the first frequency band. The method includes: determining that an existing terminal exists in a communication system, where the existing terminal is a terminal that does not support the extended frequency band; and sending a system message, where the system message includes at least configuration information of a first type cell, the first type cell is a cell used for access, and a frequency band assigned to the first type cell is within a range of the first frequency band. Therefore, this can ensure that the existing terminal initiates access in a supported frequency band, thereby reducing a possibility that the existing terminal cannot communicate normally or even is damaged because the existing terminal does not support a frequency band of a cell assigned by the base station.

In some implementations of the first aspect or the third aspect of this application, the method further includes: The base station receives a capability message of the terminal. The capability message includes information about a bandwidth capability of the terminal.

In some implementations of the first aspect or the third aspect of this application, the capability message further includes information about an available frequency band of the terminal and a starting frequency of the available frequency band of the terminal. The terminal informs the base station of the supported frequency band and the starting frequency of the supported frequency band. This can avoid a case that a frequency band assigned to the terminal by the base station exceeds the frequency band supported by the terminal, thereby reducing a possibility that the terminal cannot communicate normally or even is damaged.

In some implementations of the first aspect or the third aspect of this application, the capability message further includes carrier aggregation capability information of the terminal. The carrier aggregation capability information indicates that the terminal supports carrier aggregation in the available frequency band of the base station. This lays a foundation for improving uplink and downlink rates of the terminal in a manner of carrier aggregation.

In some implementations of the first aspect or the third aspect of this application, the bandwidth capability of the terminal is a first bandwidth, and the first bandwidth is a bandwidth of the available frequency band of the base station. The method further includes: The base station configures a second type cell or a third type cell for cell measurement and/or cell handover of the terminal. A frequency band assigned to the second type cell is within a range of the available frequency band of the base station. A frequency band assigned to the third type cell is within a range of a second frequency band. The second frequency band includes at least the extended frequency band. The base station configures, based on the bandwidth capability of the terminal, a cell used for cell measurement and/or cell handover of the terminal. This can ensure that the existing terminal communicates normally and is not damaged, and also provide frequency band utilization.

In some implementations of the first aspect or the third aspect of this application, the bandwidth capability of the terminal is a first bandwidth, and the first bandwidth is a bandwidth of the available frequency band of the base station. The method further includes: The base station configures a high priority cell for cell measurement and/or cell handover of the terminal. The high priority cell is a higher priority cell in the first type cell and a target cell. The target cell includes a second type cell and/or a third type cell. A frequency band assigned to the second type cell is within a range of the available frequency band of the base station. A frequency band assigned to the third type cell is within a range of a second frequency band. The second frequency band includes at least the extended frequency band. This can ensure that the existing terminal communicates normally and is not damaged, and also provide frequency band utilization.

In some implementations of the first aspect or the third aspect of this application, the bandwidth capability of the terminal is a second bandwidth, and the second bandwidth is a bandwidth of the first frequency band. The method further includes: The base station configures the first type cell for the cell measurement and the cell handover of the terminal. This can ensure that the existing terminal initiates access in a supported frequency band, thereby reducing a possibility that the existing terminal cannot communicate normally or even is damaged because the existing terminal does not support a frequency band of a cell assigned by the base station.

In some implementations of the first aspect or the third aspect of this application, the method further includes: The base station configures an arbitrary cell for the terminal in a connected state. A frequency band assigned to the arbitrary cell is within a range of the available frequency band of the base station to which the arbitrary cell belongs, to improve frequency band utilization and uplink and downlink rates of the terminal.

In some implementations of the first aspect or the third aspect of this application, a manner of determining that an existing terminal exists includes: determining, based on bandwidth capabilities reported by historically connected terminals, that the existing terminal exists; or determining, based on information of the historical connected terminals and a pre-configured list of the existing terminal, that the existing terminal exists; or determining, based on configuration information, that the existing terminal exists.

A fourth aspect of this application provides an electronic device, including a memory and at least one processor. The memory is configured to store a program. The at least one processor is configured to execute the program, to enable the electronic device to implement the communication method according to the second aspect or the third aspect of this application.

A fifth aspect of this application provides a computer storage medium, configured to store a computer program. When the computer program is executed, the communication method according to the second aspect or the third aspect of this application is implemented.

### BRIEF DESCRIPTION OF DRAWINGS

FIG. 1 is an example diagram of a communication scenario between a base station and a terminal;
FIG. 2 is a flowchart of a communication method disclosed in an embodiment of this application;
FIG. 3a and FIG. 3b are example diagrams of a frequency band resource configured by a base station disclosed in an embodiment of this application;
FIG. 4 is a flowchart of another communication method disclosed in an embodiment of this application;
FIG. 5a and FIG. 5b are example diagrams of another frequency band resource configured by a base station disclosed in an embodiment of this application;
FIG. 6a is a flowchart of another communication method disclosed in an embodiment of this application;
FIG. 6b is a flowchart of another communication method disclosed in an embodiment of this application;
FIG. 7 is a flowchart of another communication method disclosed in an embodiment of this application; and
FIG. 8 is an example diagram of a structure of an electronic device disclosed in an embodiment of this application.

### DESCRIPTION OF EMBODIMENTS

The following clearly and completely describes technical solutions in embodiments of this application with reference to the accompanying drawings in embodiments of this application. Terms used in the following embodiments are only intended to describe particular embodiments, and are not intended to limit this application. As used in this specification and the claims of this application, a singular expression form, "one", "a", "the", "foregoing", "the", or "this", is intended to also include "one or more" expression form, unless clearly indicated to the contrary in the context. It should be further understood that, in embodiments of this application, "one or more" means one, two, or more than two. "And/or" describes an association relationship between associated objects and represents that three relationships may exist. For example, A and/or B may represent the following cases: Only A exists, both A and B exist, and only B exists, where A and B may be singular or plural. The character "/" usually indicates that associated objects are in an "or" relationship.

Reference to "an embodiment", "some embodiments" or the like described in this specification means that a specific characteristic, structure or feature described with reference to this embodiment is included in one or more embodiments of this application. Therefore, the statements "in an embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "comprise", and "have" and variants thereof all mean "include but are not limited to", unless otherwise specially emphasized in other ways.

"A plurality of" in embodiments of this application means greater than or equal to two. It should be noted that, in descriptions of embodiments of this application, terms such as "first" and "second" are merely used for distinguishing descriptions, and cannot be understood as an indication or implication of relative importance, or an indication or implication of a sequence.

Embodiments of this application are applied to a communication system, and the communication system may be a 2^{nd} generation (2G) communication system, a 3^{rd} generation (3G) communication system, an LTE system, a 5^{th} generation (5G) communication system, an LTE and SG hybrid architecture, a SG new radio (SG New Radio, SG NR) system, a new communication system emerging in future communications development, and the like.

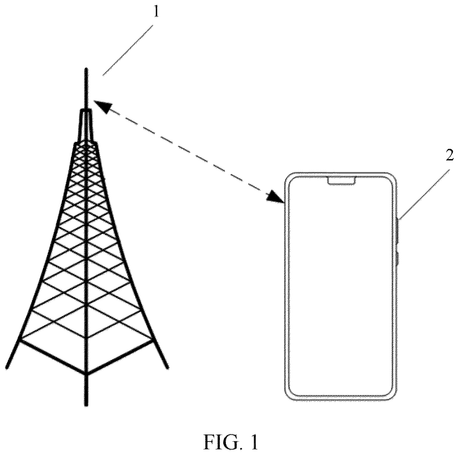

An example of the communication system is shown in FIG 1. FIG. 1 includes a base station 1 and a terminal 2.

In embodiments provided in this application, the base station can be any device located on a network side and having a wireless transceiver function, including but not limited to an evolutional Node B (NodeB, eNB, or e-NodeB, evolutional Node B) in a long term evolution (long term evolution, LTE), a base station (gNodeB or gNB) or a transmission receiving point (transmission receiving point/transmission reception point, TRP) in new radio (new radio, NR), a 3GPP subsequently evolved base station, an access node in a Wi-Fi system, a wireless relay node, a wireless backhaul node, and the like. The base station may be a macro base station, a micro base station, a picocell base station, a small cell, a relay station, a balloon station, or the like. The base station may include one or more co-site or non-co-site transmission reception points (Transmission Reception Point, TRP). The base station may alternatively be a wireless controller, a centralized unit (centralized unit, CU), and/or a distributed unit (distributed unit, DU) in a cloud radio access network (cloud radio access network, CRAN) scenario. The base station may communicate with the terminal, or may communicate with the terminal by using a relay station. The terminal may communicate with a plurality of base stations of different technologies. For example, the terminal may communicate with a base station that supports an LTE network, a base station that supports a SG network, or the terminal may perform a dual connection with a base station that supports an LTE network and a base station that supports a SG network.

In embodiments of this application, the terminal may be in various forms, such as a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and a wearable terminal device. Sometimes, the terminal may also be referred to as a terminal device, user equipment (user equipment, UE), an access terminal device, a vehicle-mounted terminal, an industrial control terminal, a UE unit, a UE station, a mobile station, a mobile console, a remote station, a remote terminal device, a mobile device, a UE terminal device, a terminal device, a wireless communication device, a UE proxy, a UE apparatus, or the like. The terminal may alternatively be a fixed terminal or a mobile terminal.

An example in which the terminal is a mobile phone is used. After the mobile phone is turned on, the mobile phone establishes a connection with the base station by selecting a public land mobile network (Public Land Mobile Network, PLMN), initial access, and another process.

The mobile phone and the base station communicate through an electromagnetic wave. A frequency band or a frequency band refers to a frequency range of the electromagnetic wave. A width of the frequency band is referred to as a bandwidth, a bandwidth, or the like.

An example in which a 5G NR communication system is used. N28 is an example of a conventional frequency band of the 5G NR. N28 means that an available uplink frequency band is 703 MHz to 748 MHz, and an available downlink frequency band is 758 MHz to 803 MHz. Currently, the 5G NR communication system only uses a part of N28. For example, an uplink frequency band used by an operator is 703 MHz to 733 MHz, and a downlink frequency band is 758 MHz to 788 MHz. That is, uplink and downlink bandwidths of communication are both 30 MHz. The uplink frequency band of 703 MHz to 733 MHz and the downlink frequency band of 758 MHz to 788 MHz may be referred to as a frequency band N28A. It can be learned that in an available frequency band of N28, 15 MHz is unused in both the uplink frequency band and the downlink frequency band.

With the development of mobile communications, bandwidth upgrade becomes a trend. For example, the 5G NR communication system increases the uplink and downlink bandwidths from 30 MHz to 45 MHz respectively. That is, the uplink frequency band is upgraded to 703 MHz to 748 MHz, and the downlink frequency band is upgraded to 758 MHz to 803 MHz. Alternatively, the uplink and downlink bandwidths are increased from 30 MHz to 40 MHz respectively. That is, the uplink frequency band is upgraded to 703 MHz to 743 MHz, and the downlink frequency band is upgraded to 758 MHz to 798 MHz.

In this case, some terminals cannot work normally or may even be damaged. For example, if a terminal that originally works in the uplink frequency band 703 MHz to 733 MHz and the downlink frequency band 758 MHz to 788 MHz is assigned with a cell having a frequency band of 733 MHz to 748 MHz (that is, a currently unused part of the N28 uplink frequency band) or a frequency band 788 MHz to 803 MHz (that is, a currently unused part of the N28 downlink frequency band), the terminal cannot communicate normally, and may even be damaged due to poor performance of a built-in filter.

Embodiments of this application provide a communication method to resolve a problem of how to ensure that an existing terminal adapts to the frequency band after the bandwidth of the frequency band on the network side is increased, to reduce a problem that the existing terminal cannot communicate normally or even is damaged.

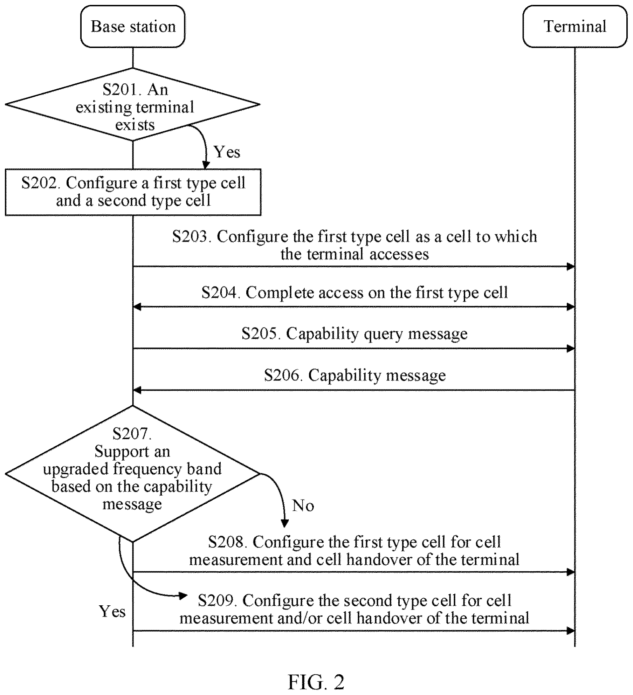

FIG. 2 is a communication method disclosed in an embodiment of this application. In a process shown in FIG. 2, an example in which a frequency band on a network side is upgraded from N28A (that is, a first frequency band) to an uplink frequency band of 703 MHz to 743 MHz and a downlink frequency band of 758 MHz to 798 MHz, and it is assumed that an operating frequency band of a terminal A is 703 MHz to 733 MHz (uplink) and 758 MHz to 788 MHz (downlink), and an operating frequency band of a terminal B is 703 MHz to 743 MHz (uplink) and 758 MHz to 788 MHz (downlink) is used for description.

FIG. 2 includes the following steps:
S201. A base station determines whether an existing terminal exists in a communication system.

In this embodiment, a terminal that does not support an upgraded frequency band is referred to as an existing terminal. Based on the foregoing examples, the operating frequency band of the terminal A is N28A, and an operating bandwidth is 30 MHz. Therefore, the terminal A is an existing terminal. However, the operating frequency band of the terminal B is N28, and an operating bandwidth is 40 MHz. Therefore, the terminal B is not an existing terminal.

In some implementations, code, a file, or the like may be pre-configured in the base station to indicate that the existing terminal still exists in the communication system.

In some other implementations, the base station may determine, based on bandwidth capabilities (for example, 30 MHz) reported by historically connected terminals, that the existing terminal still exists in the communication system. The historically connected terminals include but are not limited to terminals that accessed the base station within a preset time (for example, three months).

In still other implementations, the base station may be pre-configured with a list of the existing terminal, and identify whether the historically connected terminals are in the list. If the historically connected terminals are in the list, it is determined that the existing terminal exists. The list of the existing terminals may include models of the existing terminals.

In some implementations, S201 can be performed periodically.

When a determination result is yes, S202 is performed. When the determination result is no, there is no need to perform subsequent steps for ensuring that the existing terminal communicates normally and is not damaged, to save resources of the base station and reduce power consumption. It may be understood that if no existing terminal exists, communication may be performed according to a communication protocol. Details are not described herein again.

5202. The base station configures a first type cell and a second type cell.

Because the existing terminal still exists, to ensure that the existing terminal communicates normally and is not damaged, although the base station has already upgraded the frequency band, configuring the first type cell for the existing terminal is still needed.

The first type cell refers to a cell that may only be assigned with a subcarrier whose frequency band is within a range of a frequency band available to the existing terminal (which is a first part frequency band for short). The second type cell refers to a cell that may be assigned with a subcarrier whose frequency band is within a range of a frequency band available to the base station. In other words, the base station may assign any subcarrier in the available frequency band to the second type cell, but may only assign the subcarrier in the frequency band available to the existing terminal for the first type cell. It may be understood that the second type cell may be assigned with a subcarrier in a frequency band newly added after the frequency band of the base station is upgraded.

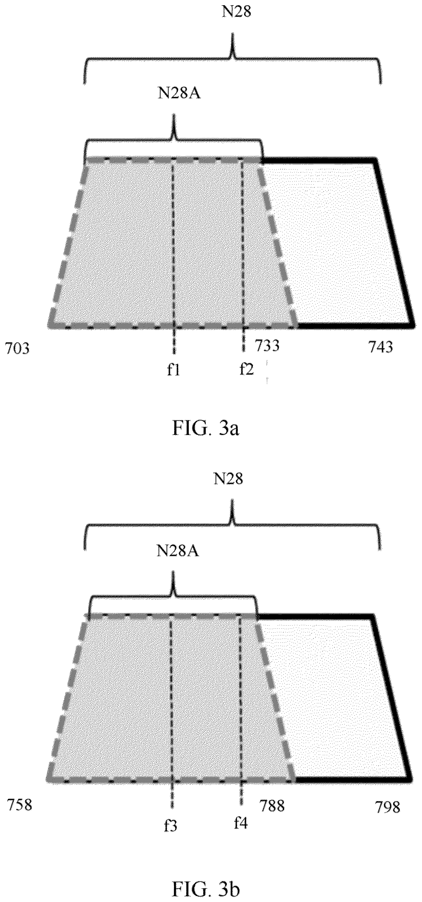

Based on the foregoing examples, FIG. 3a shows two types of frequency bands used for an uplink cell before and after the frequency band of the base station is upgraded. f1 is a center frequency of a frequency band of N28A for uplink, and the frequency band of N28A for uplink is 703 MHz to 733 MHz. f2 is a center frequency of an upgraded frequency band, that is, a frequency band of N28 for uplink, 703 MHz to 743 MHz.

FIG. 3b shows two types of frequency bands used for a downlink cell before and after the frequency band of the base station is upgraded. f3 is a center frequency of a frequency band of N28A for downlink, and the frequency band of N28A for downlink is 758 MHz to 788 MHz. f4 is a center frequency of an upgraded frequency band, that is, a frequency band of N28 for downlink, 758 MHz to 798 MHz.

It may be understood that N28 shown in FIG. 3a and FIG. 3b indicates that both the shown frequency bands are within a range of N28, not all of N28.

An uplink operating frequency band of the terminal A is 703 MHz to 733 MHz, and a downlink operating frequency band is 758 MHz to 788 MHz. Therefore, a frequency band of 733 MHz to 743 MHz or 788 MHz to 798 MHz cannot be used by the terminal A. Therefore, configuring the first type cell for the terminal A is needed. To be specific, a subcarrier is selected from the frequency band 703 MHz to 733 MHz with the center frequency f1 shown in FIG. 3a, and the subcarrier is assigned to an uplink cell in the first type cell. In addition, a subcarrier is selected from the frequency band 758 MHz to 788 MHz with the center frequency f3 shown in FIG. 3b, and the subcarrier is assigned to a downlink cell in the first type cell.

An uplink operating frequency band of the terminal B is 703 MHz to 743 MHz, and a downlink operating frequency band is 758 MHz to 798 MHz. Therefore, a subcarrier is selected from the frequency band 703 MHz to 743 MHz with the center frequency f2 shown in FIG. 3a, and the subcarrier is assigned to an uplink cell in the second type cell. In addition, a subcarrier is selected from the frequency band 758 MHz to 798 MHz with the center frequency f4 shown in FIG. 3b, and the subcarrier is assigned to a downlink cell in the second type cell. It may be understood that in the second type cell, a cell assigned with the frequency band 733 MHz to 743 MHz or 788 MHz to 798 MHz cannot be used by the terminal A.

In some implementations, the base station determines the first part frequency band based on the available frequency band before upgrade. For example, if the frequency band on the network side is upgraded from N28A to the uplink frequency band of 703 MHz to 743 MHz and the downlink frequency band of 758 MHz to 798 MHz, the base station uses the frequency band N28A before upgrading as the first part frequency band, to increase a possibility of a capability adaptation of the first part frequency band and the existing terminal.

In some other implementations, a list of frequency bands of the existing terminal is pre-configured in the base station. The list of frequency bands of the existing terminal includes information about a frequency band to which the existing terminal is adapted, such as an identifier N28A. In this case, the base station may configure the first part frequency band based on the pre-configured list of the frequency bands of the existing terminal, for example, use N28A as the first part frequency band.

It may be understood that a bandwidth of the first part frequency band is not limited to 30 MHz, and it only needs that a frequency is f1, and an upper limit of the bandwidth does not exceed 30 MHz. For example, the bandwidth may alternatively be 20 MHz.

It may be understood that S202 is an optional step. For example, S202 may be performed before the process shown in FIG. 2 and is not included in the process shown in FIG. 2.

S203. The base station configures the first type cell as a cell to which the terminal accesses.

It may be understood that the first type cell is used as a cell to which the terminal initiates access. To be specific, the base station only allows the terminal to initiate access on the first type cell, but does not allow the terminal to initiate access on the second type cell. This ensures that before a bandwidth capability of the terminal is obtained, the existing terminal communicates normally and is not damaged.

In some possible implementations, S203 is specifically: The base station includes information of the first type cell in a system message and delivers the system message. That is, the base station sends the system message to the terminal. An example of the system message is a system information block (System Information Block, SIB) or a master information block (Master Information Block, MIB).

It may be understood that, based on the foregoing examples, both the terminal A and the terminal B receive the information of the first type cell, and both initiate a random access process, that is, S204, on the first type cell.

S204. The terminal completes access on the first type cell.

In some implementations, the terminal obtains the information of the first type cell through a cell search. It may be understood that after the terminal is turned on, the terminal performs the cell search. Alternatively, the terminal may perform the cell search during a process of cell handover or cell reselection. Regardless of service scenarios, because the base station uses the first type cell as the cell to which the terminal accesses, both the existing terminal and a terminal that supports the upgraded frequency band can only find the first type cell, but not the second type cell.

Regardless of service scenarios, after the terminal finds the first type cell through a cell search process, the terminal further needs to initiate a random access process on the first type cell and perform signaling interaction with the base station to complete the random access process, to establish uplink and downlink synchronization with the base station.

S205. The base station delivers a capability query message to the terminal.

S206. The terminal reports a capability message to the base station.

The capability message includes but is not limited to information about the bandwidth capability of the terminal. The bandwidth capability is a bandwidth supported by the terminal.

In some implementations, after the terminal complete the random access process with the base station, an attach process is initiated. In the attach process, the base station sends the capability query message to the terminal, and the terminal sends the capability message to the base station in response to the capability query message.

For example, information about a bandwidth capability of the terminal A reported by the terminal A is 30 MHz, and information about a bandwidth capability of the terminal B reported by the terminal B is 40 MHz.

In some other implementations, the capability message includes information about the bandwidth capability, information about an available frequency band of the terminal and a starting frequency of the available frequency band of the terminal. For example, information about a bandwidth capability of the terminal A reported by the terminal A is 30 MHz, information about an available frequency band of the terminal is N28A, information about an uplink starting frequency of the available frequency band is 703 MHz, and information about a downlink starting frequency is 758 MHz.

S207. The base station determines, based on the capability message, whether the terminal supports the upgraded frequency band. If the terminal does not support the upgraded frequency band, step S208 is performed. If the terminal supports the upgraded frequency band, S209 is performed.

FIG. 3a and FIG. 3b are used as examples. The center frequency of the frequency band in the upgraded frequency band for uplink is f2, the center frequency of the frequency band in the upgraded frequency band for downlink is f4, and both bandwidths are 40 MHz. Based on the foregoing examples, the bandwidth capability reported by the terminal B is 40 MHz, and the base station determines that the terminal B supports the upgraded frequency band (which is a full frequency band for short). However, the bandwidth capability reported by the terminal A is 30 MHz, and the base station determines that the terminal A does not support the full frequency band.

S208. The base station configures the first type cell for cell measurement and cell handover of the terminal.

Based on the foregoing examples, the bandwidth capability reported by the terminal A is 30 MHz, and the base station determines that the terminal A does not support the full frequency band available to the base station. Therefore, the first type cell is configured for cell measurement and cell handover of the terminal A.

S209. The base station configures the second type cell for cell measurement and/or cell handover of the terminal.

Based on the foregoing examples, the bandwidth capability reported by the terminal B is 40 MHz, and the base station determines that the terminal B supports the full frequency band. Therefore, the second type cell is configured for at least one operation of cell measurement and cell handover of the terminal B.

The cell measurement means that the terminal measures power of at least one beam of each cell and determines cell quality based on a measurement result. The cell handover means that to satisfy a mobility requirement of the terminal, a cell is handed over to another cell when the terminal establishes a radio resource control (Radio Resource Control, RRC) connection with the base station.

It may be understood that because the existing terminal does not support a part of the upgraded frequency band, the existing terminal cannot be indicated to perform the cell handover or the cell measurement on an unsupported frequency band, to avoid a problem that the existing terminal cannot communicate normally or even is damaged.

In some implementations, the base station may alternatively configure the first type cell for cell measurement and/or cell handover of a terminal that supports a bandwidth of 40 MHz (for example, the terminal B). However, because the first type cell is used as a resource for the terminal (for example, the terminal A and the terminal B) to access, the second type cell is configured for cell measurement and cell handover of a terminal of this type (which is a terminal that supports the bandwidth of 40 MHz). This helps improve frequency band utilization. In addition, the second type cell is configured for cell measurement and cell handover of a terminal that supports the upgraded frequency band (such as the terminal B). This can further improve frequency band utilization.

In the process shown in FIG. 2, the base station configures the first type cell for both cell measurement and cell handover of the existing terminal. Because the subcarrier assigned to the first type cell is from the frequency band to which the existing terminals can adapt. Therefore, a possibility that the terminal cannot communicate normally or even is damaged because the frequency band exceeds a capability range of the terminal can be reduced.

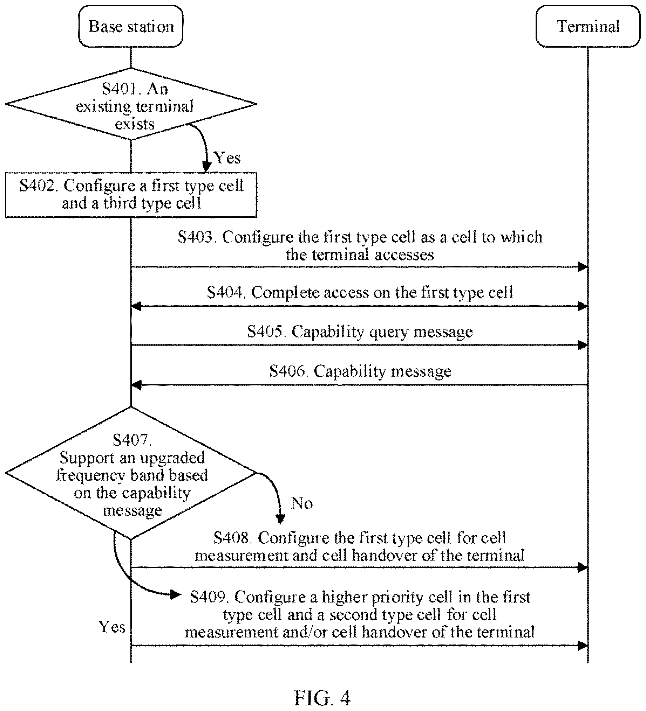

FIG. 4 is another communication method disclosed in an embodiment of this application. A main difference between FIG. 4 and the process shown in FIG. 2 is a manner that a base station configures a frequency band for a cell.

FIG. 4 includes the following steps:
S401. A base station determines whether an existing terminal exists in a communication system.

For a definition and determination method of the existing terminal, refer to S301. Details are not described herein again.

When a determination result is yes, S402 is performed.

S402. The base station configures a first type cell and a third type cell.

After a frequency band is upgraded, a frequency band available to the base station is divided into two parts. One part is a frequency band used by the base station before the frequency band is upgraded, which is referred to as a first part frequency band (that is, a first frequency band) herein. In the frequency band available to the base station after the frequency band is upgraded (that is, a full frequency band), another frequency band except the first part frequency band is referred to as an extended frequency band, and a frequency band including at least the extended frequency band is referred to as a second part frequency band (which may also be referred to as a second frequency band).

It may be understood that the first part frequency band may overlap with the second part frequency band.

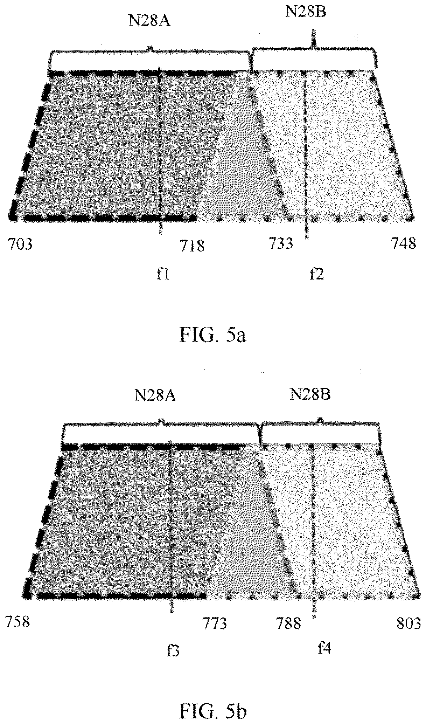

Based on the foregoing examples, the first part frequency band is N28A. To be specific, as shown in FIG. 5a, a frequency band for uplink in N28A is a frequency band of 703 MHz to 733 MHz with a center frequency f1. As shown in FIG. 5b, a frequency band for downlink in N28A is a frequency band of 758 MHz to 788 MHz with a center frequency f3. In other words, the first part frequency band is the same as the first part frequency band described above, and both use N28A as an example.

In this embodiment, an example in which the second part frequency band is N28B is used. Based on the foregoing definition, the frequency band in N28 except N28A is referred to as the extended frequency band. FIG. 5a and FIG. 5b are used as examples. The extended frequency bands are 733 MHz to 748 MHz and 788 MHz to 803 MHz. N28B refers to the extended frequency band included in N28. In FIG. 5a, bandwidths of N28B and N28A are the same (in which both are 30 MHz), and a frequency band for uplink in N28B is a frequency band of 718 MHz to 748 MHz with a center frequency f2. In FIG. 5b, bandwidths of N28B and N28A are both 30 MHz, and a frequency band for downlink in N28B is a frequency band of 773 MHz to 803 MHz with a center frequency f4. As shown in FIG. 5a and FIG. 5b, N28A overlaps with N28B.

It may be understood that in this embodiment, an example in which the upgraded frequency band is N28 (that is, an upgraded bandwidth is 45 MHz) is used for description.

It can be learned that in this embodiment, the available frequency band is divided into a plurality of small-bandwidth frequency bands to improve frequency resource utilization.

It may be understood that a bandwidth of the first part frequency band is not limited to 30 MHz, and it only needs that the frequency is f1, and an upper limit of the bandwidth does not exceed 30 MHz. A specific value of the frequency in the second part frequency band is not limited, and the bandwidth is not limited to 30 MHz. It only needs that the second part frequency band includes the extended frequency band available after upgrade.

For a definition of the first type cell, refer to S203. Details are not described herein again. The third type cell refers to a cell that may be assigned with a subcarrier whose frequency band is within a range of the second part frequency band (such as N28B).

In some implementations, the base station may further configure a priority of the first type cell to be lower than a priority of the third type cell. An objective of configuring a priority is described with reference to S409.

It may be understood that step S402 is an optional step.

S403. The base station configures the first type cell as a cell to which a terminal accesses.

For a specific manner of configuration of the base station, refer to S203. Details are not described herein again.

S404. The terminal completes access on the first type cell.

S405. The base station delivers a capability query message to the terminal.

S406. The terminal reports a capability message to the base station.

In this embodiment, it may be understood that the capability message includes at least a starting frequency of the available frequency band of the terminal, which may provide the base station with a more comprehensive and accurate bandwidth capability. For example, when the bandwidths of N28A and N28B shown in FIG. 5a are both 30 MHz, if the terminal only reports the bandwidth capability, it is not enough for the base station to determine the frequency band available to the terminal.

Based on the foregoing examples, a capability message reported by a terminal A includes an uplink starting frequency of 703 MHz and a downlink starting frequency of 758 MHz of an available frequency band of the terminal A. A capability message reported by a terminal B includes uplink starting frequencies of 703 MHz and 718 MHz of an available frequency band of the terminal B, and downlink starting frequencies of 758 MHz and 773 MHz of the available frequency band of the terminal B.

In some possible implementations, the capability message further includes a bandwidth capability. For example, the capability message reported by the terminal A further includes a bandwidth capability of 30 MHz of the terminal A. The capability message reported by the terminal B further includes a bandwidth capability of 45 MHz of the terminal B.

S407. The base station determines, based on the capability message, whether the terminal supports the upgraded frequency band. If the terminal does not support the upgraded frequency band, step S408 is performed. If the terminal supports the upgraded frequency band, S409 is performed.

FIG. 5a and FIG. 5b are used as examples. A center frequency of the upgraded frequency band is f2 and a bandwidth is 45 MHz. Based on the capability messages reported by the terminal A and the terminal B in S406, the base station determines that the terminal A does not support the upgraded frequency band and the terminal B supports the upgraded frequency band.

S408. The base station configures the first cell for cell measurement and cell handover of the terminal.

Based on the capability message reported by the terminal Ain S406, the base station configures the first type cell for both the cell measurement and the cell handover of the terminal A.

S409. The base station configures a higher priority cell in the first type cell and the third type cell for cell measurement and/or cell handover of the terminal.

Based on the capability message reported by the terminal B in S406, the base station configures the higher priority cell in the first type cell and the third type cell for at least one operation of the cell measurement and the cell handover of the terminal B.

As described above, the base station configures the priority of the first type cell to be lower than the priority of the third type cell. Therefore, in S409, the base station configures the third type cell with a higher priority for the cell measurement and/or the cell handover of the terminal B.

Because the terminal can only perform access on the first type cell, there is a great possibility that a load of the first type cell is greater than a load of the third type cell. Therefore, to improve utilization of the third type cell, when the cell measurement and/or the cell handover is performed, the terminal that supports the full frequency band, for example, the terminal B, may be configured to give priority to the third type cell.

It can be learned that in addition to reducing a possibility that the terminal cannot communicate normally or even is damaged because a frequency band used by the base station exceeds a capability range of the terminal, a process shown in FIG. 4 can further improve frequency band utilization.

In addition to ensuring that the existing terminal communicates normally and is not damaged by adjusting a manner of configuring the frequency band for the cell, the base station can also increase uplink and downlink rates by using the upgraded frequency band.

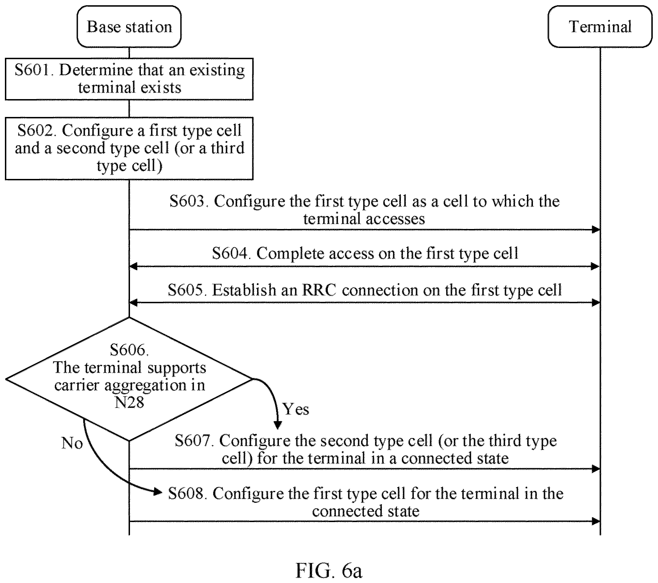

FIG. 6a shows another communication method disclosed in an embodiment of this application, including the following steps:
S601. A base station determines that a terminal (that is, an existing terminal) that does not support an upgraded frequency band exists.

For a specific determining manner, refer to S201 in the foregoing embodiments. Details are not described herein again.

S602. The base station configures different types of cells.

The different types of cells include the foregoing first type cell and the foregoing second type cell or the third type cell. It may be understood that available frequency bands of the different types of cells are as shown in FIG. 3a and FIG. 3b, or as shown in FIG. 5a and FIG. 5b

It may be understood that step S602 is an optional step.

S603. The base station configures the first type cell as a cell to which the terminal accesses.

Based on examples of the foregoing embodiments, both a terminal A and a terminal B receive information of the first type cell indicated by a system message, and initiate a random access process on the first type cell.

S604. The terminal completes access on the first type cell.

In some implementations, the terminal completes access with the base station on the first type cell by using a random access process in a communication protocol.

S605. The terminal establishes a radio resource control (Radio Resource Control, RRC) connection with the base station on the first type cell.

In some implementations, after completing access on the first type cell by using the random access process, the terminal may establish the RRC connection with the base station through an attach process and the like specified by the communication protocol. After the terminal establishes the RRC connection with the base station, the terminal and the base station are in an RRC-Connected state. That is, the terminal is in a connected state.

S606. The base station queries whether the terminal supports carrier aggregation in a frequency band N28. If the terminal supports the carrier aggregation in a frequency band N28, S607 is performed. If the terminal does not support the carrier aggregation in a frequency band N28, S608 is performed.

The carrier aggregation means that to enable the terminal to obtain greater uplink and downlink rates, two or more component carriers (Component Carrier, CC, which may be simply considered as a cell) may be aggregated together to obtain a greater transmission bandwidth. The two or more CCs include a primary cell and a secondary cell. The primary cell establishes an RRC connection with the terminal, but the secondary cell does not establish an RRC connection with the terminal.

It may be understood that in this embodiment, the first type cell that establishes the RRC connection with the terminal is the primary cell. If the terminal supports the carrier aggregation in the frequency band N28, the terminal may use another type of cell except the first type cell as the secondary cell.

In some implementations, the terminal may carry information of supporting the carrier aggregation in the frequency band N28 in a capability message and report the capability message to the base station.

S607. The base station configures the second type cell or the third type cell for the terminal in the connected state.

The connected state refers to the RRC_CONNECTED state. That is, in the RRC_CONNECTED state, although the terminal does not support a part of the upgraded frequency band, the terminal may use all of the upgraded frequency band in a manner of carrier aggregation.

FIG. 3a is used as an example. The primary cell is configured with a subcarrier whose frequency band is within a range of N28A, and the secondary cell is configured with a subcarrier whose frequency band is within a range of N28. FIG. 5b is used as an example. The primary cell is configured with a subcarrier whose frequency band is within a range of N28A, and the secondary cell is configured with a subcarrier whose frequency band is within a range of N28B.

Therefore, in the RRC_CONNECTED state, the terminal can obtain greater uplink and downlink rates.

S608. The base station configures the first type cell for the terminal in the connected state.

It can be learned from a process shown in FIG. 6a that although the existing terminal does not support all of the upgraded frequency band of the base station, after the terminal establishes the RRC connection with the base station, for a terminal that supports the carrier aggregation of all frequency band, cells of all frequency bands may be configured in the RRC_CONNECTED state. This can improve the uplink and downlink rates of the terminal, but also improve frequency band utilization.

It may be understood that the process shown in FIG. 6a shows a frequency band configuration policy of the base station for the terminal in the connected state. In some implementations, when the terminal establishes the RRC connection with the base station, cell handover or cell measurement may occur in the terminal. If the terminal is an existing terminal, the frequency band before upgrade still needs to be configured for the terminal to reduce a possibility that the terminal cannot communicate normally or is damaged because the terminal is not adapted to the frequency band of the base station.

A configuration of the frequency band of the terminal in different states such as RRC_CONNECTED, the cell handover, the cell measurement, and the like may be implemented in combination of FIG. 6a and FIG. 2, or FIG. 6a and FIG. 4.

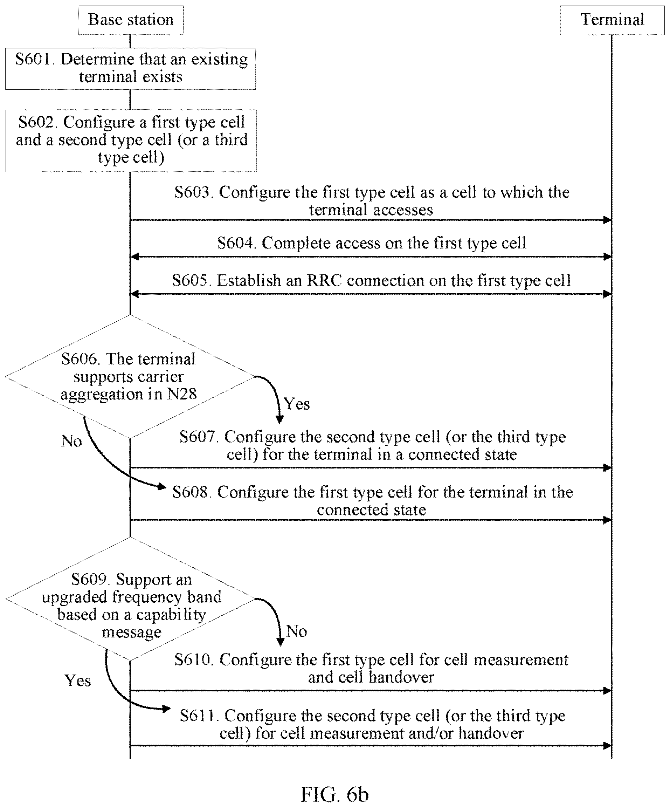

FIG. 6b is a communication method in combination of FIG. 6a and FIG. 2. Compared with FIG. 6a, it should be noted that,

during a process of performing S604, the terminal reports the capability message to the base station. The capability message includes the information of whether the terminal supports the carrier aggregation in N28 and a bandwidth capability of the terminal. In some implementations, the capability message may further include a starting frequency of an available frequency band of the terminal.

Compared with FIG. 6a, S609 to S611 are added in FIG. 6b:
S609. The base station determines, based on the capability message, whether the terminal supports the upgraded frequency band.

For a specific implementation of S609, refer to S207. Details are not described herein again.

If a determination result of S609 is no, S610 is performed. If the determination result of S609 is yes, S611 is performed. For a specific implementation of S610, refer to S208. For a specific implementation of S611, refer to S209. Details are not described herein again.

In other words, after configuring the frequency band for the terminal in the connected state, the base station continues to configure the frequency band used by the terminal for cell measurement and cell handover, specifically such as S609 to S611.

In the foregoing embodiments, policies are configured mainly by the base station, to reduce a possibility that the existing terminal cannot communicate normally or even is damaged after the frequency band is upgraded. The following embodiments mainly introduces a policy adopted by the terminal.

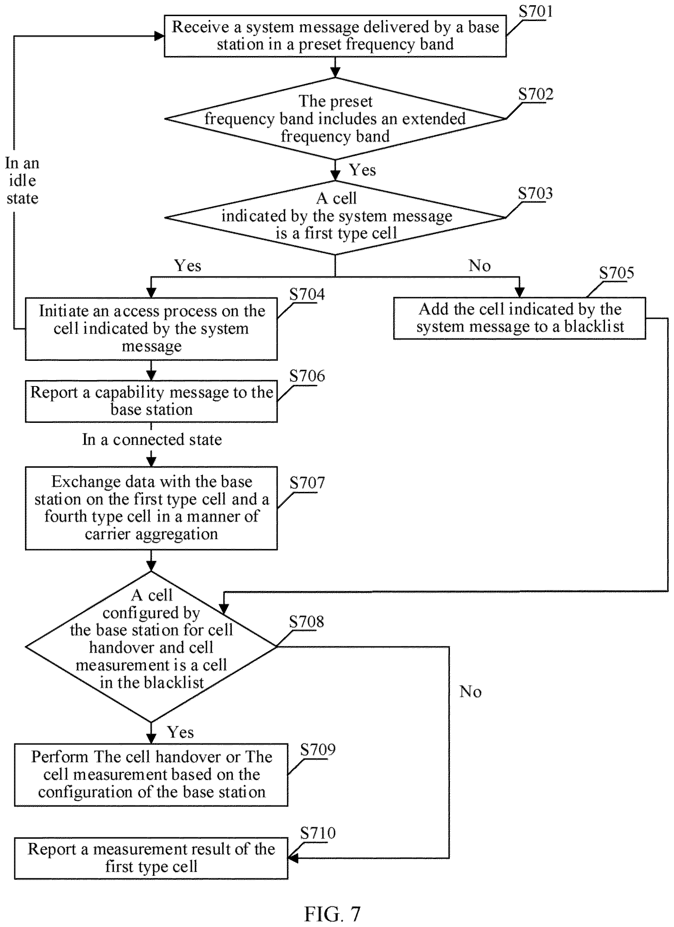

FIG. 7 is a method performed by a terminal disclosed in an embodiment of this application. FIG. 7 includes the following steps:
S701. The terminal receives a system message delivered by a base station in a preset frequency band.

The preset frequency band is a frequency band that the terminal tries to access. In some implementations, before S701, the terminal determines the preset frequency band according to a communication protocol. It may be understood that the system message received by the terminal in the preset frequency band is a system message delivered by the base station in the preset frequency band. Receiving or delivering in the preset frequency band means receiving or delivering near a center frequency of the preset frequency band.

The system message carries information of a cell, that is, the system message at least indicates one cell.

It may be understood that the base station may configure the cell in the manner described in the foregoing embodiments (for example, S202 or S402). Alternatively, the base station may not configure the cell in the manner described in the foregoing embodiments, but may configure the cell in another manner specified by the communication protocol. This is not limited herein. A cell configured in another manner may also be a first type cell.

In this embodiment, a cell that is assigned with a subcarrier at least part of whose frequency band is within a range of an extended frequency band is referred to as a fourth type cell. A definition of the extended frequency band is described in S402. For example, the uplink frequency band of the extended frequency band in FIG. 3a is 733 MHz to 743 MHz, and the uplink frequency band of the extended frequency band in FIG. 5a is 733 MHz to 748 MHz.

It may be understood that when the base station configures the cell in the manner described in the foregoing embodiments (for example, S202 or S402), the fourth type cell belongs to a second type cell or a third type cell.

It can be learned that in some implementations, the information of the cell is information of the first type cell. In some other implementations, the information of the cell is information of the fourth type cell.

For an example of the system message, refer to the process shown in FIG. 2. Details are not described herein again.

S702. The terminal determines whether the preset frequency band includes the extended frequency band.

It may be understood that S702 is an optional step. If the extended frequency band is not included, the following steps may not be performed to save power consumption of the terminal.

If a determination result of S702 is yes, S703 is performed.

S703. The terminal determines whether a cell indicated by the system message is the first type cell.

In some implementations, the terminal is pre-configured with the information of the first type cell. By comparing the information of the cell in the system message with the information of the first type cell, the terminal determines whether the cell indicated by the system message is the first type cell. An example of the information of the cell is a physical cell identifier.

If a determination result of S703 is yes, S704 is performed. If the determination result of S703 is no, S705 is performed.

S704. The terminal initiates an access process on the cell indicated by the system message.

S705. The terminal adds the cell indicated by the system message to a blacklist.

An objective of S705 is described with reference to S710.

Return to S701 without limiting a sequence of performing S705. That is, the terminal performs cell search again. It may be understood that in some implementations, a preset frequency band used by the terminal when performing S701 again is different from the preset frequency band used when performing S701 last time. A cell indicated by a system message received again by the terminal may be the same as or may be different from the cell indicated by the system message received previously.

It may be understood that after S704, the terminal may establish an RRC connection with the base station on the first type cell, and during this process, the base station may also perform S706.

S706. The terminal reports a capability message to the base station.

After the terminal establishes the RRC connection with the base station, the base station may perform steps S207 to S209 or S407 to S409, to configure an appropriate cell for cell measurement and cell handover of the terminal in a connected state. In some implementations, the base station may also perform S605 to S607 to increase uplink and downlink rates of the terminal.

Correspondingly, the terminal in the connected state performs S707.

S707. The terminal exchanges data with the base station on the first type cell and the fourth type cell in a manner of carrier aggregation.

It may be understood that carrier aggregation is implemented with the first type cell as a primary cell and the fourth type cell as a secondary cell.

It may be understood that the base station may not perform steps of configuring an appropriate cell for the terminal in the connected state as described in S207 to S209 or S407 to S409. Therefore, to reduce a possibility that the terminal cannot communicate normally or is damaged because the cell is not adapted, the terminal may also perform S708.

S708. The terminal determines whether the cell configured by the base station for the cell handover and the cell measurement is a cell in the blacklist. If the cell configured by the base station for the cell handover and the cell measurement is a cell in the blacklist, S709 is performed. If the cell configured by the base station for the cell handover and the cell measurement is not a cell in the blacklist, S710 is performed.

With reference to description in S705, the cell in the blacklist is the fourth type cell.

S709. The terminal performs the cell handover or the cell measurement based on the configuration of the base station.

It may be understood that the terminal performs the cell handover in response to a cell handover instruction delivered by the base station. Alternatively, the terminal initiates the cell measurement periodically in response to a cell measurement instruction delivered by the base station.

S710. The terminal reports a measurement result of the first type cell.

Because the terminal does not support a frequency band of the fourth type cell, the terminal does not measure the fourth type cell but only measures the first type cell. Therefore, a measurement result of the fourth type cell is not reported.

One of the basis for the cell handover is the measurement result of the cell reported by the terminal. Therefore, in some implementations, for the instruction configured by the base station to perform the cell handover on the fourth type cell, because the terminal does not support the frequency band of the fourth type cell, the terminal does not measure the fourth type cell but only reports the measurement result of the first type cell. It may be understood that because the base station does not receive the measurement result of the fourth type cell, even if a cell where the terminal is configured to perform cell handover is the fourth type cell, a handover process on the fourth type cell is not actually triggered. In some other implementations, the terminal initiates the cell measurement on the first type cell periodically in response to the cell measurement instruction delivered by the base station.

It can be learned that even if the base station delivers instructions for the cell handover and the cell measurement on the fourth type cell, the terminal does not perform the instructions of the base station because the fourth type cell is not adapted to the terminal.

It may be understood that the terminal may alternatively camp only on the first type cell without establishing an RRC connection with the base station on the first type cell. In this case, the terminal may alternatively perform S701 to S704 periodically. To be specific, when the terminal in an idle state performs cell reselection, reselecting to the fourth type cell is avoided.

It can be learned from FIG. 7 that the terminal selects an appropriate cell based on the frequency band supported by the terminal, to ensure that the terminal camps on, accesses, hands over and measures the appropriate cell, so as to ensure that the terminal communicates normally and is not damaged.

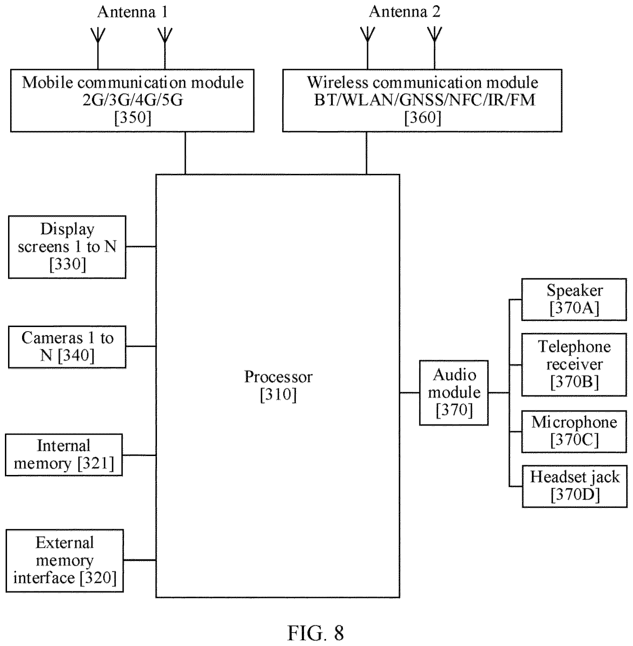

FIG. 8 shows an example of composition of an electronic device according to an embodiment of this application. A mobile phone is used as an example. The electronic device may include a processor 310, an external memory interface 320, an internal memory 321, a display screen 330, a camera 340, an antenna 1, an antenna 2, a mobile communication module 350, a wireless communication module 360, and the like.

It may be understood that a structure shown in this embodiment does not constitute a specific limitation on the electronic device. In some other embodiments, the electronic device may include more or fewer components than those shown in the figure, or some components may be combined, or some components may be split, or components are arranged in different manners. Components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video encoder and decoder, a digital signal processor (digital signal processor, DSP), a baseband processor, a neural-network processing unit (neural-network processing unit, NPU), and/or the like. Different processing units may be independent components, or may be integrated into one or more processors.

It may be understood that, an interface connection relationship between the modules shown in this embodiment is merely an example for description, and does not constitute a limitation on the structure of the electronic device. In some other embodiments of this application, the electronic device may alternatively use an interface connection manner different from that in the foregoing embodiments, or use a combination of a plurality of interface connection manners.

The external memory interface 320 may be configured to connect to an external memory card, for example, a Micro SD card, to expand a storage capability of the electronic device. The external memory card communicates with the processor 310 through the external memory interface 320, to implement a data storage function. For example, files such as music and a video are stored in the external memory card.

The internal memory 321 may be configured to store computer-executable program code. The executable program code includes instructions. The processor 310 runs the instructions stored in the internal memory 321, to perform various functional applications and data processing of the electronic device. The internal memory 321 may include a program storage area and a data storage area. The program storage area may store an operating system, an application required for at least one function (such as a sound playback function and an image display function), and the like. The data storage area may store data (for example, audio data and a phone book) and the like created during use of the electronic device. In addition, the internal memory 321 may include a high-speed random access memory, and may also include a non-volatile memory, such as at least one magnetic disk memory, a flash memory, or a universal flash storage (universal flash storage, UFS). The processor 310 executes various functional applications and data processing of the electronic device by running the instructions stored in the internal memory 321 and/or the instructions stored in the memory disposed in the processor.

A wireless communication function of the electronic device may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may also be reused to improve antenna utilization. For example, the antenna 1 may be reused a diversity antenna of a wireless local area network. In some other embodiments, the antenna may be used together with a tuning switch.

The mobile communication module 350 may provide a solution for wireless communication such as 2G/3G/4G/5G and the like applied to the electronic device. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transfer a processed electromagnetic wave to the modem processor for demodulation. The mobile communication module 350 may further amplify a signal modulated by the modem processor, convert an amplified signal into an electromagnetic wave by using the antenna 1 for radiation. In some embodiments, at least some function modules of the mobile communication module 350 may be disposed in the processor 310. In some embodiments, at least some of the function modules of the mobile communication module 350 and at least some of modules of the processor 310 may be disposed in a same component.

In some embodiments, the electronic device initiates or receives a call request by using the mobile communication module 350 and the antenna 1.

In addition, an operating system runs on the foregoing components, for example, an iOS operating system, an Android operating system, or a Windows operating system. An application may be installed and run on the operating system.

## Claims

1. A communication method, applied to a communication system comprising a base station and a terminal, wherein the method comprises:
sending, by the base station, a system message, wherein the system message comprises at least configuration information of a cell used for access, an available frequency band of the base station comprises a first frequency band and an extended frequency band, and the extended frequency band is a frequency band not comprised in the first frequency band;
determining, by the terminal, that the cell used for access is a first type cell, wherein a frequency band assigned to the first type cell is within a range of the first frequency band, and an available frequency band of the terminal is the first frequency band; and
performing, by the terminal, access on the cell used for access.

2. A communication method, applied to a terminal, wherein the method comprises:
receiving a system message sent by a base station, wherein the system message comprises at least configuration information of a cell used for access, an available frequency band of the base station comprise a first frequency band and an extended frequency band, and the extended frequency band is a frequency band not comprised in the first frequency band;
determining that the cell used for access is a first type cell, wherein a frequency band assigned to the first type cell is within a range of the first frequency band, and an available frequency band of the terminal is the first frequency band; and
performing access on the cell used for access.

3. The method according to claim 2, wherein after the performing access on the cell used for access, the method further comprises:
sending a capability message to the base station.

4. The method according to claim 3, wherein the capability message comprises:
information about the available frequency band of the terminal and a starting frequency of the available frequency band of the terminal.

5. The method according to claim 4, wherein the capability message further comprises:
information about a bandwidth capability of the terminal.

6. The method according to claim 4 or 5, wherein the capability message further comprises:
carrier aggregation capability information, wherein the carrier aggregation capability information indicates that the terminal supports carrier aggregation in the available frequency band of the base station.

7. The method according to any one of claims 2 to 6, wherein the method further comprises:
determining that at least part of a frequency band assigned to a cell configured by the base station for cell handover and cell measurement is within a range of the extended frequency band; and
reporting a measurement result of the first type cell.

8. A communication method, applied to a base station, wherein an available frequency band of the base station comprise a first frequency band and an extended frequency band, the extended frequency band is a frequency band not comprised in the first frequency band, and the method comprises:
determining that an existing terminal exists in a communication system, wherein the existing terminal is a terminal that does not support the extended frequency band; and
sending a system message, wherein the system message comprises at least configuration information of a first type cell, the first type cell is a cell used for access, and a frequency band assigned to the first type cell is within a range of the first frequency band.

9. The method according to claim 8, wherein the method further comprises:
receiving a capability message of the terminal, wherein the capability message comprises information about a bandwidth capability of the terminal.

10. The method according to claim 9, wherein the capability message further comprises:
information about an available frequency band of the terminal and a starting frequency of the available frequency band of the terminal.

11. The method according to claim 9 or 10, wherein the capability message further comprises:
carrier aggregation capability information of the terminal, wherein the carrier aggregation capability information indicates that the terminal supports carrier aggregation in the available frequency band of the base station.

12. The method according to any one of claims 9 to 11, wherein the bandwidth capability of the terminal is a first bandwidth, and the first bandwidth is a bandwidth of the available frequency band of the base station; and
the method further comprises:
configuring a second type cell or a third type cell for cell measurement and/or cell handover of the terminal, wherein a frequency band assigned to the second type cell is within a range of the available frequency band of the base station, a frequency band assigned to the third type cell is within a range of a second frequency band, and the second frequency band comprises at least the extended frequency band.

13. The method according to any one of claims 9 to 11, wherein the bandwidth capability of the terminal is a first bandwidth, and the first bandwidth is a bandwidth of the available frequency band of the base station; and
the method further comprises:
configuring a high priority cell for cell measurement and/or cell handover of the terminal, wherein the high priority cell is a higher priority cell in the first type cell and the target cell, the target cell comprises a second type cell and/or a third type cell, a frequency band assigned to the second type cell is within a range of the available frequency band of the base station, a frequency band assigned to the third type cell is within a range of a second frequency band, and the second frequency band comprises at least the extended frequency band.

14. The method according to any one of claims 9 to 13, wherein the bandwidth capability of the terminal is a second bandwidth, and the second bandwidth is a bandwidth of the first frequency band; and
the method further comprises:
configuring the first type cell for the cell measurement and the cell handover of the terminal.

15. The method according to any one of claims 8 to 14, wherein
the method further comprises:
configuring an arbitrary cell for the terminal in a connected state, wherein a frequency band assigned to the arbitrary cell is within a range of the available frequency band of a base station to which the arbitrary cell belongs.

16. The method according to any of claims 8 to 15, the determining that an existing terminal exists comprises:
determining, based on bandwidth capabilities reported by historically connected terminals, that the existing terminal exists; or
determining, based on information of the historical connected terminals and a pre-configured list of the existing terminal, that the existing terminal exists; or
determining, based on configuration information, that the existing terminal exists.

17. A communication method, applied to a terminal, wherein the method comprises:
receiving a message sent by a base station, wherein the message comprises configuration information of a cell used for cell measurement, the configuration information of the cell used for the cell measurement comprises configuration information of a first cell and configuration information of a second cell, an available frequency band of the base station comprise a first frequency band and a second frequency band, the second frequency band comprises at least an extended frequency band, the extended frequency band is another frequency band in the available frequency band of the base station except the first frequency band, and the terminal supports the first frequency band and does not support the extended frequency band; and
when the first cell is a fourth type cell and the second cell is a first type cell, the terminal does not report a measurement result of the first cell, but only reports a measurement result of the second cell, wherein a frequency band assigned to the first type cell is within a range of the first frequency band, and at least part of a frequency band assigned to the fourth type cell overlaps with a part of the extended frequency band.

18. The method according to claim 17, wherein the first frequency band is N28A, and the second frequency band is N28B.

19. The method according to claim 17 or 18, wherein a bandwidth capability of the terminal is 30 MHz.

20. The method according to claims 17 to 19, wherein the configuration information of the cell used for the cell measurement indicates the terminal to perform cell access, cell reselection, cell handover, or addition of a secondary cell.

21. A communication method, applied to a terminal, wherein the method comprises:
receiving a message sent by a base station, wherein the message comprises configuration information of a cell used for cell measurement, an available frequency band of the base station comprise a first frequency band and a second frequency band, the second frequency band comprises at least an extended frequency band, the extended frequency band is another frequency band in the available frequency band of the base station except the first frequency band, and the terminal supports the first frequency band and does not support the extended frequency band; and
when a first cell configured by the base station for the cell measurement is a fourth type cell, the terminal does not report a measurement result of the first cell, and at least part of a frequency band assigned to the fourth type cell overlaps with a part of the extended frequency band.

22. The method according to claim 21, wherein the first frequency band is N28A, and the second frequency band is N28B.

23. The method according to claim 21 or 22, wherein a bandwidth capability of the terminal is 30 MHz.

24. The method according to claims 21 to 23, wherein the configuration information comprises configuration information of a second cell used for the cell measurement, and the method further comprises: when the second cell is a first type cell, the terminal reports a measurement result of the second cell, and a frequency band assigned to the first type cell is within a range of the first frequency band.

25. A communication method, applied to a base station, wherein an available frequency band of the base station comprise a first frequency band and a second frequency band, the second frequency band comprises at least an extended frequency band, the extended frequency band is another frequency band in the available frequency band of the base station except the first frequency band, and the method comprises:
sending a message, wherein when an existing terminal exists in a communication system, the message comprises at least configuration information of a first type cell, the existing terminal is a terminal that does not support the extended frequency band, the first type cell is a cell used for access, and a frequency band assigned to the first type cell is within a range of the first frequency band.

26. The method according to claim 25, wherein the method further comprises:
receiving a capability message of the terminal, wherein the capability message comprises information about a bandwidth capability of the terminal.

27. The method according to claim 26, wherein the capability message further comprises:
information about an available frequency band of the terminal and a starting frequency of the available frequency band of the terminal.

28. The method according to claim 26 or 27, wherein the capability message further comprises:
carrier aggregation capability information of the terminal, wherein the carrier aggregation capability information indicates that the terminal supports carrier aggregation in the available frequency band of the base station.

29. The method according to any one of claims 26 to 28, wherein the bandwidth capability of the terminal is a first bandwidth, and the first bandwidth is a bandwidth of the available frequency band of the base station; and
the method further comprises:
configuring a second type cell or a third type cell for cell measurement and/or cell handover of the terminal, wherein a frequency band assigned to the second type cell is within a range of the available frequency band of the base station, a frequency band assigned to the third type cell is within a range of the second frequency band, and the second frequency band comprises at least the extended frequency band.

30. The method according to any one of claims 26 to 28, wherein the bandwidth capability of the terminal is a first bandwidth, and the first bandwidth is a bandwidth of the available frequency band of the base station; and
the method further comprises:
configuring a high priority cell for cell measurement and/or cell handover of the terminal, wherein the high priority cell is a higher priority cell in the first type cell and the target cell, the target cell comprises a second type cell and/or a third type cell, a frequency band assigned to the second type cell is within a range of the available frequency band of the base station, a frequency band assigned to the third type cell is within a range of the second frequency band, and the second frequency band comprises at least the extended frequency band.

31. The method according to any one of claims 26 to 29, wherein the bandwidth capability of the terminal is a second bandwidth, and the second bandwidth is a bandwidth of the first frequency band; and
the method further comprises:
configuring the first type cell for the cell measurement and/or the cell handover of the terminal.

32. The method according to any one of claims 25 to 31, wherein
the method further comprises:
configuring an arbitrary cell for the terminal in a connected state, wherein a frequency band assigned to the arbitrary cell is within a range of the available frequency band of a base station to which the arbitrary cell belongs.

33. The method according to any of claims 25 to 32, that it is determined that the existing terminal exists comprises:
determining, based on bandwidth capabilities reported by historically connected terminals, that the existing terminal exists; or
determining, based on information of the historical connected terminals and a pre-configured list of the existing terminal, that the existing terminal exists; or
determining, based on configuration information, that the existing terminal exists.

34. The method according to claim 31, wherein the second bandwidth is 30 MHz.

35. The method according to any one of claims 25 to 34, wherein the first frequency band is N28A, and the second frequency band is N28B.

36. A communication method, applied to a base station, wherein an available frequency band of the base station comprise a first frequency band and a second frequency band, the second frequency band comprises at least an extended frequency band, the extended frequency band is another frequency band in the available frequency band of the base station except the first frequency band, and the method comprises:
when a bandwidth capability of a first terminal is a second bandwidth, configuring a first type cell for cell measurement of the terminal, wherein the second bandwidth is a bandwidth of the first frequency band, and a frequency band assigned to the first type cell is within a range of the first frequency band.

37. The method according to claim 36, wherein the method further comprises:
when a bandwidth capability of a second terminal is a first bandwidth, configuring a second type cell or a third type cell for cell measurement of the terminal, wherein the first bandwidth is a bandwidth of the available frequency band of the base station, a frequency band assigned to the second type cell is within a range of the available frequency band of the base station, and a frequency band assigned to the third type cell is within a range of the second frequency band.

38. The method according to claim 36 or 37, wherein the method further comprises:
receiving a capability message of the first terminal, wherein the capability message comprises information about the bandwidth capability of the first terminal.

39. The method according to claim 38, wherein before the receiving a capability message of the first terminal, the method further comprises: sending, by the base station, a message, wherein the message comprises information of a cell used for access, the information of the cell used for access comprises information of the first type cell, and the information about the first type cell is used for a terminal that receives the message to access the first type cell.

40. The method according to claim 39, wherein that the information of the cell used for access comprises information of the first type cell comprises: when an existing terminal exists in a communication system, the information of the cell used for access comprises the information of the first type cell, wherein the existing terminal supports the first frequency band and does not support the extended frequency band.

41. The method according to claim 39 or 40, wherein that the message comprises the information of the first type cell comprises: when the existing terminal exists in the communication system, the information of the cell used for access only comprises the information of the first type cell.

42. The method according to claims 36 to 41, wherein the second bandwidth is 30 MHz.

43. The method according to claims 37 to 42, wherein the first bandwidth is 40 MHz.

44. The method according to any one of claims 36 to 43, wherein the first frequency band is N28A, and the second frequency band is N28B.

45. An electronic device, comprising:
a memory and at least one processor, wherein
the memory is configured to store a program; and
the at least one processor is configured to run the program, to enable the electronic device to implement the communication method according to any one of claims 2 to 7, 17 to 20, or 21 to 24.

46. An electronic device, comprising:
a memory and at least one processor, wherein
the memory is configured to store a program; and
the at least one processor is configured to run the program, to enable the electronic device to implement the communication method according to any one of claims 8 to 16, 25 to 35, or 36 to 44.

47. A computer storage medium, configured to store a computer program, wherein when the computer program is executed, the communication method according to any one of claims 2 to 7, 17 to 20, or 21 to 24 is implemented.

48. A computer storage medium, configured to store a computer program, wherein when the computer program is executed, the communication method according to any one of claims 8 to 16, 25 to 35, or 36 to 44 is implemented.
